# EUROPEAN PATENT SPECIFICATION

(11) **EP 1 086 857 B1**
(45) Date of publication and mention of the grant of the patent: **10.12.2003**
(21) Application number: 00308153.6
(22) Date of filing: 19.09.2000
(51) Int. Cl.: B60R 9/042

(54) **Vehicle storage roof rack**
Dachgepäckträger für Kraftfahrzeuge
Porte-bagages pour le toit de véhicules

(30) Priority: 21.09.1999 GB 9922176
(43) Date of publication of application: 28.03.2001
(73) Proprietor: Bri-Stor Systems Ltd., Stafford, Staffordshire, ST18 0PF (GB)
(72) Inventor: Brough, Bernard, Hixon, Stafford, Staffordshire, ST18 0PF (GB); Kirkwood, James, Hixon, Stafford, Staffordshire ST18 0PF (GB); Daykin, Adam Anthony, Hixon, Stafford, Staffordshire, ST18 0PF (GB); Skelding, Philip Norman, Hixon, Stafford, Staffordshire, ST18 0PF (GB)
(74) Representative: Swindell & Pearson

(56) References cited:
- EP-A- 0 461 709
- CH-A- 684 256
- DE-A- 4 338 609
- FR-A- 2 600 954
- FR-A- 2 684 341
- FR-A- 2 689 073
- PATENT ABSTRACTS OF JAPAN vol. 1996, no. 10, 31 October 1996 (1996-10-31) & JP 08 156707 A (HASEGAWA KOGYO KK), 18 June 1996 (1996-06-18)

## Description

The present invention concerns improvements in or relating to storage racks, particularly but not exclusively storage racks for vehicles, for example, panel vans.

There is a requirement to provide storage for elongate items, for example ladders and bundles of tubes which are too long to be accommodated within the luggage carrying space of a vehicle. This requirement is presently met by storing the items on a rack attached to the roof of the vehicle.

In certain vans, for example panel vans, the roof is so high from the ground that storing and securing loads on a roof rack presents a safety problem.

FR 2600954 according to the preamble of claim 1 discloses a support 3, 5 which is designed to be fixed longitudinally on the central part of the roof, a moving box structure 6 which can be received and locked onto this support and in which loads may be housed. The box structure 6 being capable of tilting on rollers of the support at the rear of the vehicle 1 and being provided with means 24 for rolling in the longitudinal members 22 of a chassis 3 of the support. A safety strap 9, one end of which is fixed to the box structure 6 and the other end of which is attached to the support. A winch 12 around which the strap 9 may be wound or unwound is fixed to the back end of the support 3, 5 and a transverse element 13 for anchoring and guiding the strap 9 is fixed to the support, the strap 9 passing around this element 13 to allow the box structure 6 to be raised or lowered on the support.

According to the present invention there is provided a storage rack for mounting on an elevated generally horizontal surface, including a rail assembly, mounting means for mounting the rail assembly on the surface, a load carrying trolley movable along the rail assembly from a storage position where one end of the trolley is at one end of the rail assembly to a loading position where said one end of the trolley projects beyond the said one end of the rail assembly and the said surface, rail engaging means mounted on the trolley between its mid point and the other end thereof and trolley supporting guide means at said one end of the rail assembly and supporting the trolley thereon whereby the trolley is movable linearly along the rail assembly from its storage position until said rail engaging means disengage from the rail assembly to enable said one end of the trolley to pivot downwardly about the rail engaging means, a locking assembly being provided on the said one end of the trolley and being engageable with complimentary means on the rail assembly to hold the trolley in the storage position, the locking assembly comprising: a catch means engageable with the rail assembly; a latch means including a latch mounted on the trolley and engageable with a keeper fixed to the rail assembly; and a lock disengaging means comprising an elongate member operable from a position remote from said one end of the load carrying trolley, and being removably engageable with the locking assembly to disengage the catch means from the rail assembly and to disengage the latch means from the trolley and characterized in that whilst the elongate member remains engaged with the locking assembly, the elongate member can move the load carrying trolley relative to the rail assembly away from the storage position.

Preferably the load carrying trolley includes a load carrying platform which extends transversely beyond the rail assembly.

Preferably load securing means are provided on the load carrying platform.

Preferably the rail assembly comprises a pair of parallel spaced apart channels with the opening in one channel facing the opening in the other channel.

Preferably the mounting means are fixable to the rail assembly at a variety of predetermined points to provide for flexibility of mounting of the rail assembly on the surface.

Preferably the load carrying trolley includes a pair of longitudinally extending members spaced apart from each other at a distance less than the distance between the channels of the rail assembly and including bracing members extending transversely between said longitudinally extending members.

Preferably said rail engaging means are mounted to the side or underside of said members and comprise sliding or rolling elements located within the channels and rotatably mounted to the said members.

Preferably the trolley supporting guide means comprises a rotatable assembly mounted about an axis extending transversely between the channel members on which the lower surface of said longitudinally extending members engage. Preferably the rotatable assembly comprises flanged wheels rotatably mounted about a transversely extending rail assembly end bar.

Preferably the catch means is biased towards a condition in which the bar is locked in position in the catch means.

Preferably the latch is biased towards a position where it engages and locks with the keeper.

Preferably mounting means are provided for the lock disengaging means at the one end of the load carrying trolley, the mounting means being adapted to maintain engagement of the disengaging means with the locking assembly when the catch and latch assemblies are in an open position.

Preferably the catch means comprises a ramp member fixed at the one end of the load carrying trolley and presenting a downwardly directed rail assembly end bar engaging surface extending in the direction of said one end of the trolley to said other end and a hook member pivotally mounted on said ramp member and presenting an upwardly inclined surface leading from a bar engaging hook, means being provided on said hook member such that its inclined surface is biased towards the inclined surface of the ramp member thereby providing for entrapment of the rail assembly end bar in the hook between the ramp and hook members.

Preferably an operating arm extends from the end of said hook member on its side opposite from the hook said operating arm including engagement surfaces for selective engagement with the lock disengaging means.

Preferably the latch of the latch means is pivotally mounted about an axis parallel to the elongate axis of the load carrying trolley and engageable with the slotted keeper fixed to the rail assembly at its outer end. Preferably the latch has an extension at its inner end provided with means for selective engagement by the lock disengaging means.

Preferably the lock disengaging means includes a tube engageable over a rod projecting downwardly and outwardly from the said one end of the load carrying trolley whereby the disengaging means can be fitted over said rod and rotated and moved axially relative thereto, the disengaging means having a first transverse finger adapted on rotation to engage the selective engagement means on the extension of the latch and at least one shorter finger adapted to engage the extension from the hook member of the catch means whereby on rotation of the disengaging means the latch is disengaged from its keeper and on axial movement of the disengaging means along the rod away from the said one end of the trolley means the hook member is disengaged from the rail assembly end bar.

Preferably a guide plate is provided on the end of the ramp member, the guide plate having a slot therein to permit removal of the lock engaging means from the downwardly extending bar only when the fingers are rotated sufficiently out of engagement with the catch and latch means.

Preferably an end stop in said guide plate slot(s) prevents excessive axial movement of the lock disengaging means along said downwardly directed bar.

Preferably a gas strut is connected to the trolley to control its pivotal movement.

Preferably the trolley includes a means of aiding the loading of the trolley comprising a winch and strap mounted on the trolley, the strap ending in a hook which may engage with the load to be lifted. Preferably the winch includes a fail-safe locking arrangement whereby the winch will not rotate in the normal position.

Preferably the lockable winch arrangement comprises a bar with a handle, a reel mounted on the bar, the bar rotatably mounted on side plates fixed to the trolley, a top plate supported by the side plates with an aperture through which the reel protrudes, at least one radially extending pin mounted on the bar and having a length greater than the clearance between the bar and the top plate, a spring which biases the reel towards a side of the aperture in which position at least one of the radially extending pins lie below the top plate and prevent rotation of the bar by abutment of the pin or pins with the top plate, the pin or pins being movable against the spring bias into the aperture to allow rotation of the reel.

Alternatively the trolley includes a means of aiding the loading of the trolley comprising a crank assembly mounted on the trolley. Preferably the crank assembly comprises side plates fixed to the trolley, a bar with a handle rotatably mounted on the side plates, two arms fixed to the bar, and a U-shaped ladder rung receiving channel rotatably mounted between the two arms.

Preferably a forward trolley and ladder securing assembly is provided comprising a mounting means for mounting the assembly on the elevated generally horizontal surface, a support means mounted on the mounting means to support a forward part of the trolley and ladder, a securing member connected to one side of the support means and selectively positionable, and a locking means operating on the securing member to lock the securing member in position over the said forward part of the trolley and ladder.

Preferably the support means comprises side supporting members fixed to the mounting means and a horizontal supporting means mounted on the side supporting members.

Preferably the outermost side supporting members project above the topmost level of the horizontal supporting means.

Preferably the horizontal supporting means includes at least one roller, rotatably mounted on the side supporting members.

Preferably the securing member is pivotally connected to one of the side supporting members.

Preferably the locking means includes a lower connecting member pivotally connected to one of the side supporting member, an upper connecting member pivotally connected to the lower connecting member and to the said securing member, a mounting bracket pivotally connected to the upper and lower connecting members at their junction, the upper and lower connecting members, the securing member and the said side supporting member in use providing a toggle clamp enabling the securing member to be locked in position over the forward part of the ladder and trolley.

Preferably the mounting bracket is adapted to selectively maintain engagement of the lock disengaging means.

An embodiment of the present invention will now be described by way of example only with reference to the accompanying drawings in which:-
Fig. 1 shows a view from above of a storage rack;
Fig. 2 shows a side view;
Fig. 3 shows a view from one end;
Fig. 4 shows a plan view of said one end;
Fig. 5 shows a side view of one end of a lock disengaging means;
Figs. 6 to 9 show a side view of one end of the storage rack in different operating positions,
Fig. 10 shows an end view of the storage rack incorporating a modification;
Figs. 11 and 12 show respectively partial side views of the modified rack in its storage and unloading position;
Figs. 13 and 14 show plan and side views respectively of the load carrying trolley including a loading winch;
Figs. 15 and 16 show side and plan views respectively of the winch in the locked position;
Figs. 17 and 18 show side and plan views respectively of the winch in the operational position;
Figs. 19 and 20 show plan and side views respectively of the load carrying trolley including a crank arm for loading;
Figs. 21a to 21c show sequential side views of a ladder being loaded onto a vehicle; and
Figs. 22 and 23 show end views of a forward trolley and ladder securing assembly in the open and locked positions respectively.

The storage rack described in this non-limiting embodiment is intended for mounting on the top of a van known as a panel van, that is a van having a relatively high roof, normally greater than the height of the driver/crew of the van, thereby providing roof access problems.

The rack comprises a rail assembly having a pair of inwardly facing channels 10 fixed in position relative to each other by transverse cross-members 12. The channels 10 and cross-members 12 have apertures therethrough at frequent intervals to which can be attached by suitable fixing means, for example nuts and bolts, a plurality of mounting means (not shown in the drawings for sake of clarity) by which the rail assembly can be rigidly fixed to the roof of a van with the longitudinal axes of the assembly running in the fore and aft direction of the van.

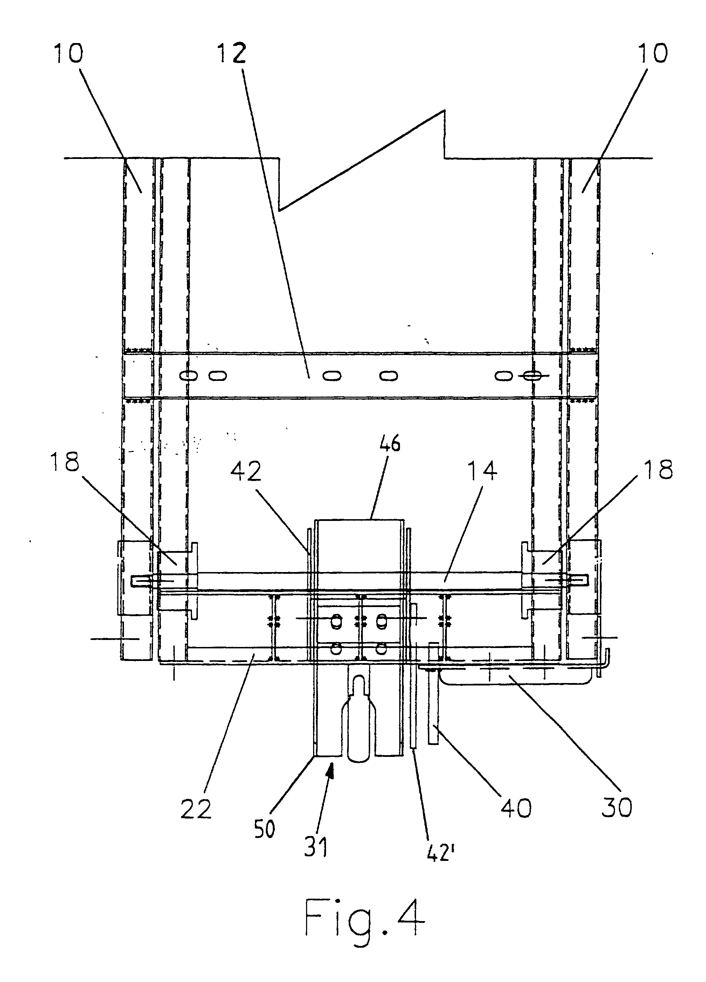

As most clearly illustrated in Fig. 4, a circular section rail assembly end bar 14 is mounted in brackets 16 fixed to the channels 10 and carries, at each end, a flanged plastics material roller 18 rotatably mounted on the bar.

A load carrying trolley 19 is mounted between the channels 10 and comprises a pair of parallel longitudinally extending members 20 fixed together by transverse bracing members 22. The underside of the members 20 rest on and are movable over the rollers 18 and at a point on the side members spaced from the front end thereof there is mounted a cross member 24 having rollers 28 rotatably mounted thereon, the rollers being located outside the members 20 and within the channels 10 such that if the load carrier is unrestrained it can move over the rail assembly guided by the rollers 18 and 28.

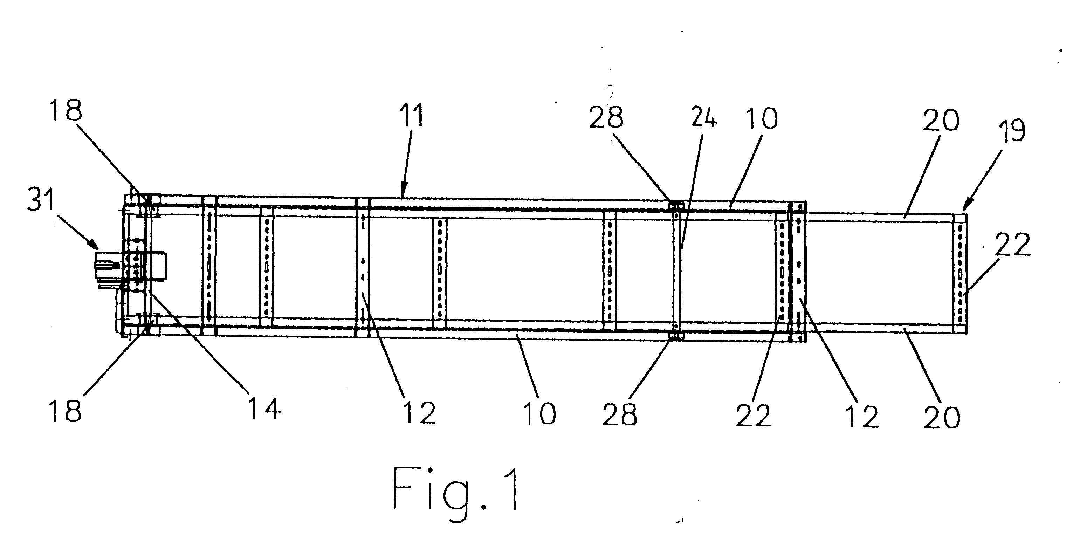

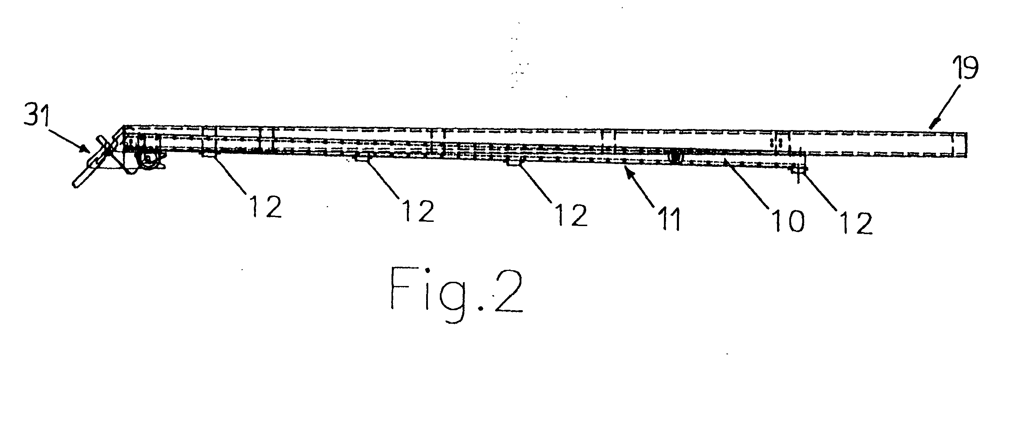

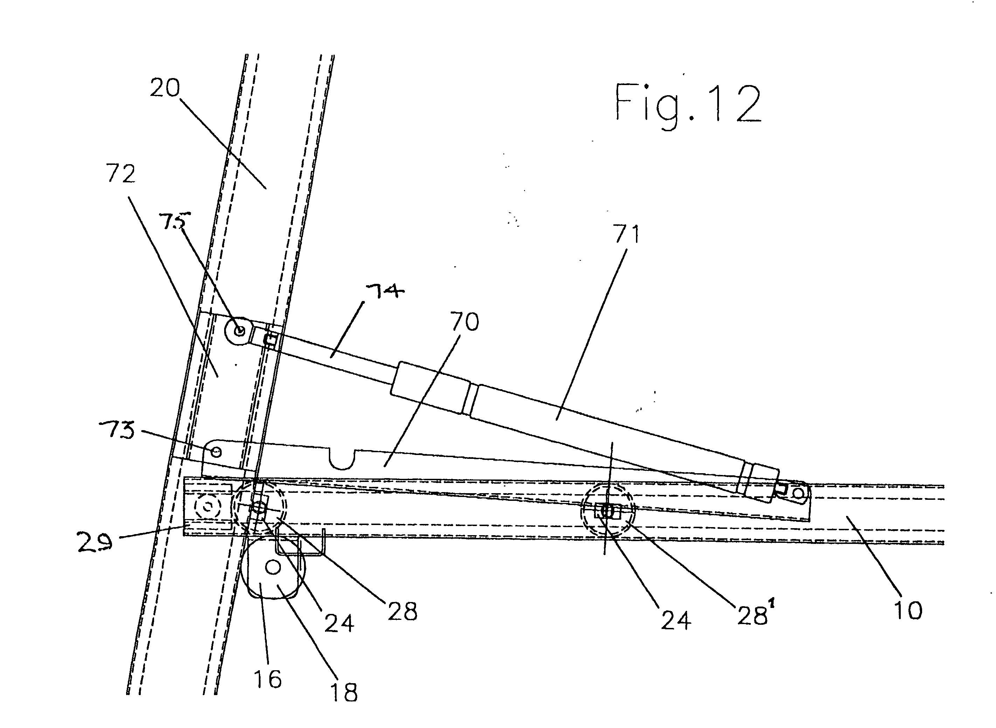

If the load carrying trolley is moved to the left, as viewed in Figs. 1 and 2, it will be appreciated that it can readily travel over the rail assembly, being guided between the channels 10 so that its one (rear) end projects beyond the end of the rail assembly. This movement can continue until the rollers 28 about an end stop 29, as shown in Fig. 12, when the axis of rotation of the rollers has passed beyond the axis of the end bar roller 18 at which stage the trolley can be pivoted about the rollers 28, that is the rear end of the trolley can be lowered towards or onto the ground. In this inclined position, which may be fairly close to the vertical (at the rear of the vehicle to which the rack is fitted), it is a relatively easy task to fit and secure items, for example ladders, to the trolley and for this purpose load attachment means are provided on the trolley. These are not shown in the drawings but may comprise ropes attached to the uppermost bracing member 22 and ladder engaging hooks attached to an intermediate bracing members 22.

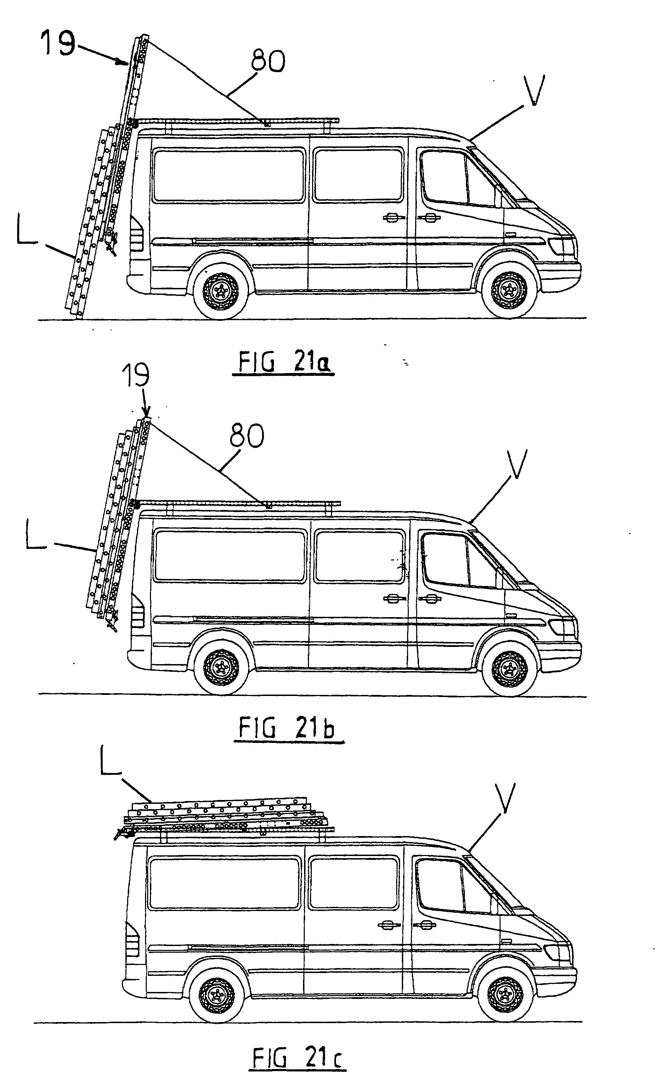

Figs. 21a to Fig. 21c show a sequence of side views in which a ladder L is loaded onto a vehicle V by means of the load carrying trolley 19. In Fig. 21a, a ladder L is laid against the load carrying trolley 19, which is shown in the lowermost loading position at the back of the vehicle V. In Fig. 21b the ladder L has been secured in position on the load carrying trolley 19. In Fig. 21c the load carrying trolley 19 has been raised onto the top of the vehicle V and is shown in the secured travelling position.

It will be noticed in Figs. 21a to 21c that there is a strap 80 to limit the amount of pivotal movement of the trolley relative to the rails assembly, the strap 80 being formed from a webbing and being attached between the front end bracing member 22 of the trolley 19 and a suitable cross-member 12 of the rail assembly.

It will be realised that anyone loading the storage rack in its lowermost position does so from a relatively safe spot behind the vehicle and that he can load the trolley without having to over-stretch or climb to gain access to the top of the van. He can also secure the load on the trolley from this relatively safe ground position.

After the load has been secured the trolley is pivoted upwardly about the axis of rollers 28 and it can then be pushed over the top of the van into the storage position shown in Figs. 1, 2 and 21c.

It will be realised that it is important to be able to readily lock the trolley in the storage position such that it is secure when the van is moving. This is achieved by a locking assembly located at the rear end of the trolley and engaging with corresponding members fixed to the rear end of the rail assembly.

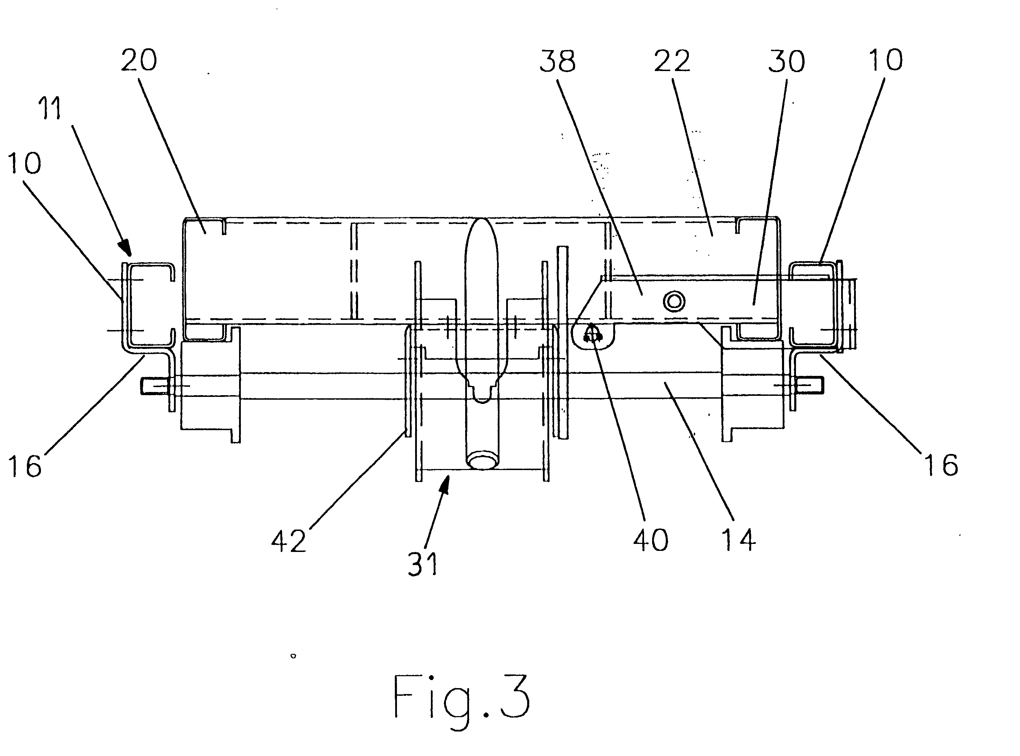

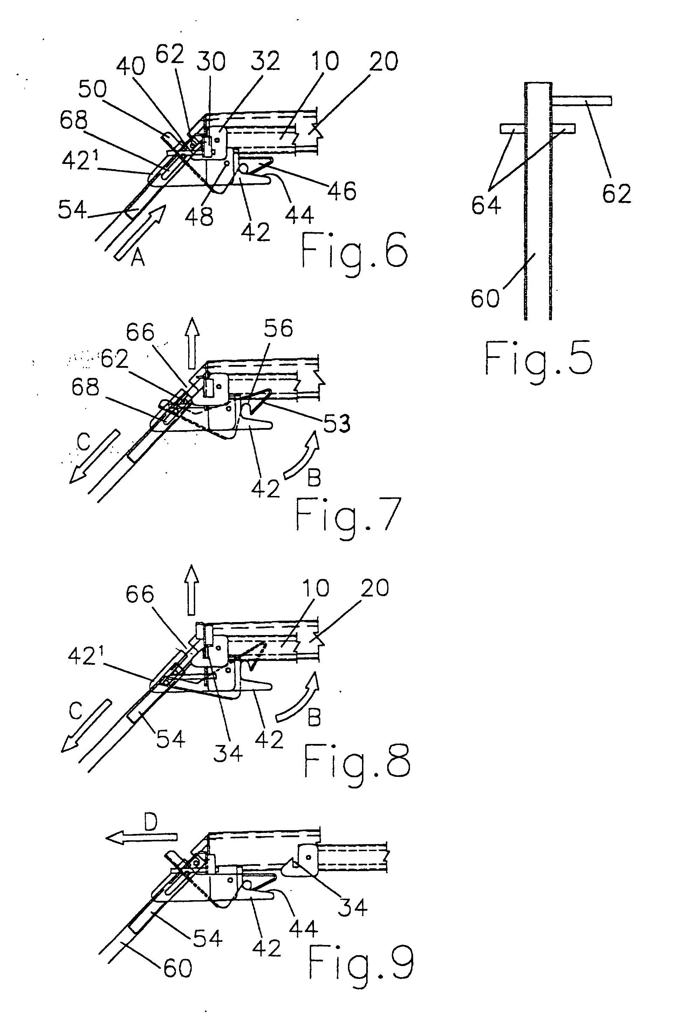

The locking assembly is best illustrated in Figs. 3 to 9. It comprises two elements namely a catch means and a latch means. The latch means will be described first and can be seen most clearly in Figs. 3 and 4. It comprises a latch 30 pivotally mounted to the rear bracing member 22 of the trolley. It is spring or gravity biased in the clockwise direction as viewed in Fig. 3. A keeper 32 (see also Fig. 6) is fixed to the end of the channel 10 and has an upwardly directed slot 34 (Fig. 8) to receive the latch. Obviously, to free the latch it is necessary to pivot it in an anti-clockwise direction and this is achieved by means of an extension 38 which carries an operating rod 40. It will be appreciated that downward movement of the rod 40 causes disengagement of the latch from the keeper. How this is achieved will be described below.

The second element of the locking assembly comprises a catch means including a pair of spaced ramp members 42 fixed to the underside of the load carrying trolley and having two forward projections 44 defining ramp surfaces which are inclined downwardly away from the rear end of the trolley. Pivotally mounted between the first members 42 is a hook member 46 spring or gravity biased in the clockwise direction as viewed in Figs. 6 to 9. The hook member 46 is rotatable about a pivot axis 48 and has a rearwardly extending operating arm 50. One of the fixed members 42 has a rearwardly directed extension 42' which has an inclined slot 68 formed therein, the slot opening upwardly.

A circular section rod 54 is fixed to and extends rearwardly and downwardly from the end cross-member 22 of the trolley.

Fig. 6 shows the catch means in its locking position where the end of an inclined surface 53 on the end of the hook member 46 and leading to the hook 56 has its inner end overlapping the ramp members 42 so that the bar 14 at the end of the rail assembly can be held in the hook and locked between the ramp and hook members.

To release the bar to permit movement of the trolley along the rails it is necessary to pivot the hook member 46 in the anti-clockwise direction illustrated by arrow B in Figs. 7 and 8. This movement is achieved by a removable lock disengaging member 60, the upper end of which is shown in Figs. 5 to 9. The disengaging member 60, at its upper tabular end has a first radially extending finger 62 and spaced therebelow a pair of diametrically oppositely extending shorter fingers 64. The hollow end can be fitted in the direction of arrow A (Fig. 6) over the rod 54. It is fitted over the rod with the finger 62 directed upwardly, that is at 90° to the orientation shown in Figs. 6 to 9. In this orientation it is able to pass between the extension 42' but the first finger cannot engage the rod 40 or the operating arm 50 until it is rotated through 90° and this is permitted by providing a first upwardly opening slot 66 Figs. 7 and 8) in the extension 42'. An outwardly and downwardly inclined slot 68 capable of accommodating finger 62 is also formed in the extension 42' leading rearwardly, downwardly from slot 66 and it will be appreciated that in the orientation illustrated in Figs. 6 to 8, when the disengaging member 60 is moved over the bar 54 away from the trolley its outward movement is ended on abutment of the finger 62 with the bottom of the slot 68.

Figs. 6 and 7 show that the fingers 64 abut the operating arm 50 of the hook member 46 so that axial movement of the disengaging member 60 in the direction of arrow C (Figs. 7 and 8) pivots the hook member 46 in an anti-clockwise direction to lift the hook to release the rail assembly end rod 14. Fig. 7 shows that the longer finger 62 after partial travel of the member 60 in the direction of arrow C, abuts the rod 40 projecting from the latch 38. Further movement in the direction of arrow C to the end-most position illustrated in Fig. 8 shows that the latch is rotated to release it from the notch 34 in keeper 32. In this condition both elements of the locking mechanism are released so that a pull on the disengaging member 60 in the direction of arrow D (Fig. 9) commences movement of the load carrying trolley relative to the rail assembly away from the storage position, as described earlier in the specification.

It will be realised that movement in directions opposite from the arrows illustrated in the drawing will cause the load carrying trolley to return to its storage position and as it reaches it the latch and catch means will automatically engage owing to their spring biasing. It is only in the engaged condition that the member 60 can be released such that it provides a tell-tale to the operator warning him if the catch and lock means are not engaged.

Various modifications can be made without departing from the scope of the invention, one of which is to provide an extended load carrying surface by providing a load platform attached to the load carrying trolley. This enables, for example, a pair of ladders to be mounted side by side or a ladder to be mounted alongside other elongate cargo, for example bundles of tubes, carpets, poles etc. Hitherto storage racks have been capable of carrying only a single ladder so that the rack described above, with its capability of carrying two ladders, presents a valuable improvement over existing arrangements. The rack can be loaded and unloaded safely by the person from a position at ground level behind the vehicle.

The locking assembly can be modified but it is important that it comprises two elements and that the elements are self locking. The trolley can be adapted to carry other loads, for example small boats, bicycles.

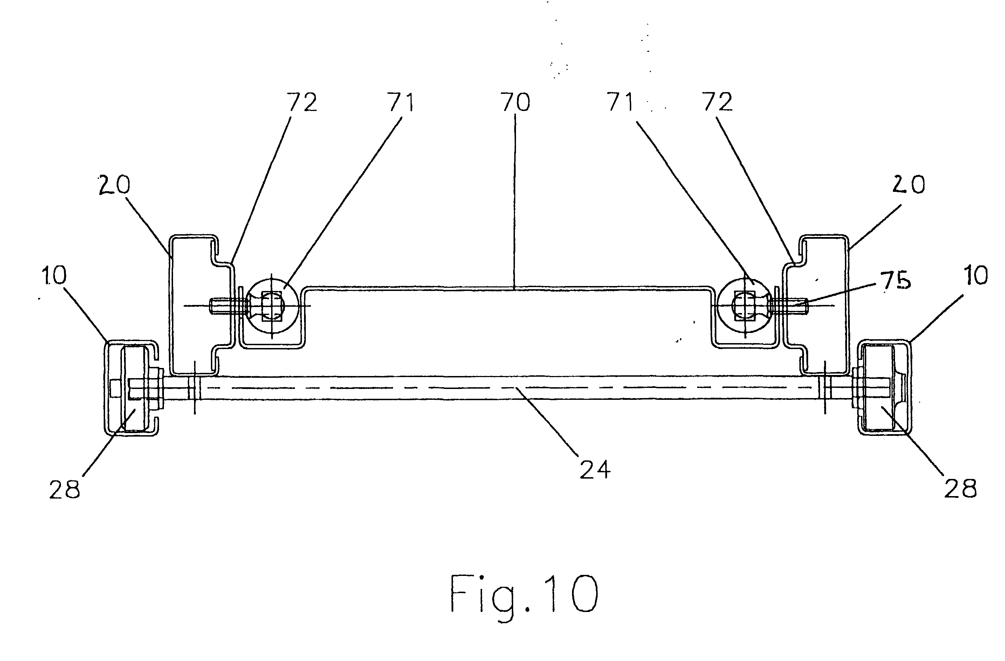

Figs. 10, 11 and 12 show a further modification where the pivotal movement of the trolley relative to the rail assembly is controlled, that is effectively counter-balanced by a gas strut and more particularly a pair of gas struts arranged alongside each trolley longitudinal member 20.

The gas struts 71 are proprietary products and will not be described in any detail. It will be understood that they will be chosen to provide a resistance to extension and an assistance to contraction which is designed to counterbalance the downwards and upwards pivotal movement of the trolley respectively. The piston end of each gas strut 71 is pivotally mounted to a truss like strut carrier 70 which, in turn, is pivotally mounted at its rear end about an axis 73 to the side member 20 of the trolley. The free end of the piston 74 of the gas strut 71 is also pivotally mounted about an axis 75 to the side member 20. The mounting to the side members is by way of a mounting plate 72.

The carrier 70, near to its forward end has a cross member 76 attached to its underside, the cross-member 76 carrying auxiliary rollers 28' at its outer end, the rollers 28' being mounted in the channels 10 of the rail assembly.

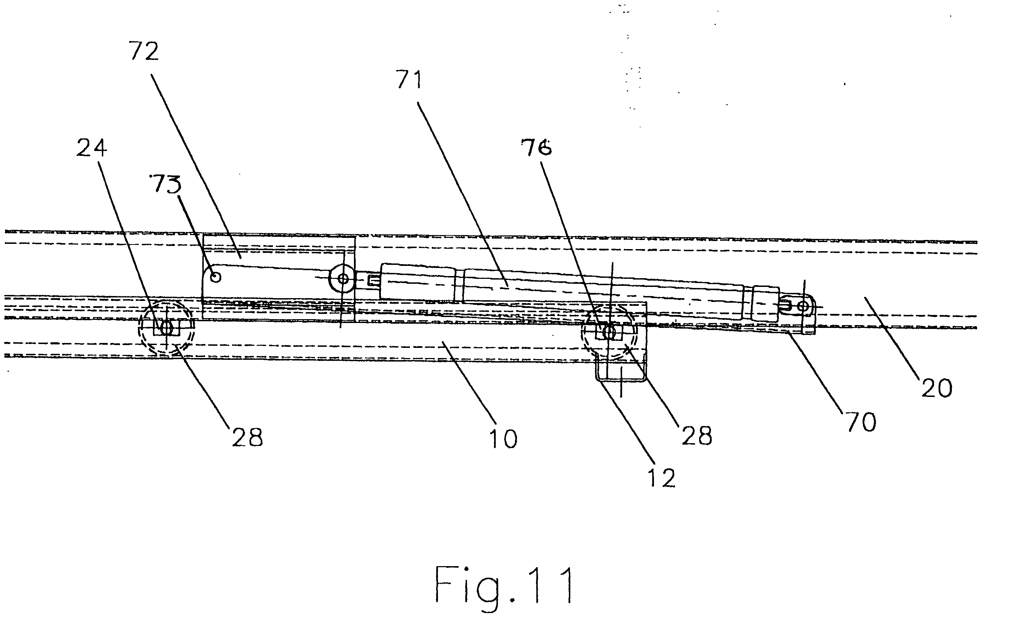

Fig. 11 shows the gas strut in its retracted position when the trolley is in the storage position illustrated in Figs. 1 and 2. Fig. 12 shows the trolley in its downwardly pivoted position with the gas strut extended. It will be realised that the piston 74 of the gas strut will be retracted from the cylinder as the trolley pivots about the axis of roller 28, this extension counter-balancing the downward pivotal forces exerted by the trolley. Similarly, upwards pivotal movement of the trolley from the position shown in Fig. 12 to an approximately horizontal attitude will be assisted by retraction of the gas strut.

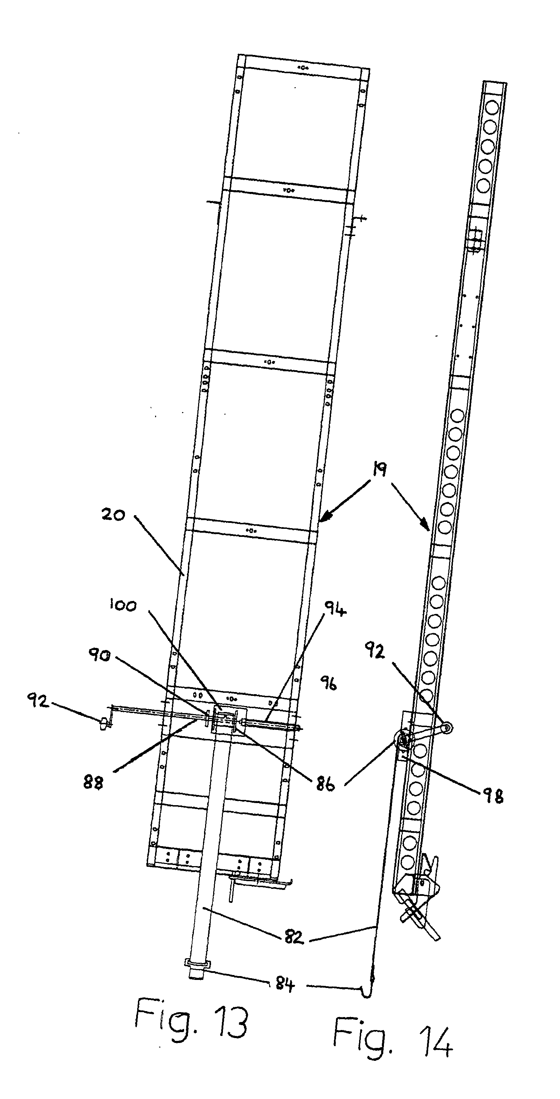

In another modification, means for aiding the loading of the ladder onto the trolley are provided. One such means, a winch and strap arrangement, is shown in Figs. 13 to 18. The winch and strap arrangement includes a strap 82 attached to a reel 86, fixed to a circular section bar 88, rotatably mounted in side plates 98 which are fixed to the longitudinally extending members 20 of the load carrying trolley 19. At the free end of the strap 82 is a strap hook 84. A handle 92 is fixed at one end to the rotating bar 88. A top plate is fixed to the side plates 98, and includes a rectangular aperture 100 through which protrudes a part of the reel 86. A coiled spring 94 is mounted on the circular section bar 88 and extends between the reel 86 and a side plate 98. A pair of diametrically opposed radially extending pins 90 is located on the bar 88 between the reel 86 and the side plate 98 on the same side of the reel 86 as the handle 92, and close to the reel 86. The pins 90 are longer than the clearance distance between the bar 88 and the top plate 96.

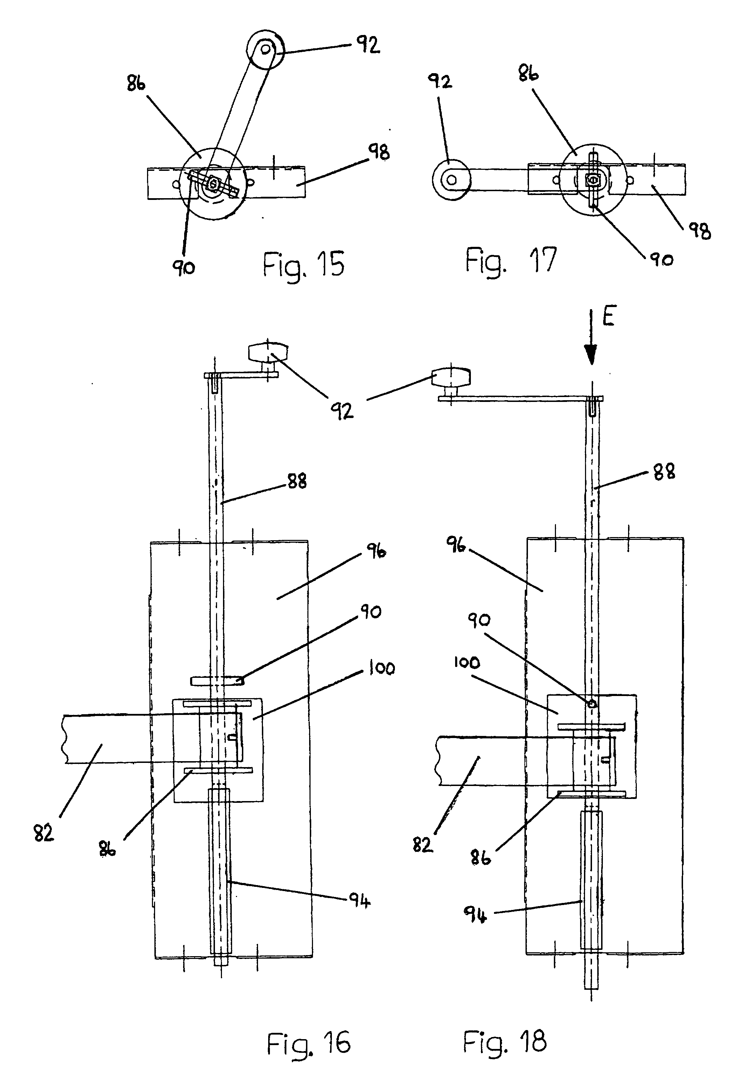

The winch includes a drum locking means. Figs. 15 and 16 show the winch in the locked position. The spring 94 biases the reel 86 against a side of the aperture 100. In this position the pins 90 are underneath the top plate 96 and because the clearance distance between the bar 88 and the top plate 96 is less then the length of the pins 90, the bar 88 is prevented from rotating and hence the reel and strap are locked.

Figs. 17 and 18 show the winch in the operating position. To operate the winch it is necessary to apply and maintain an axially directed force on the handle 92 in the direction of the arrow E in Fig. 18. The force acts against the spring element 94, and moves the reel 86 across the aperture 100. The pins move from under the top plate 96 into the aperture 100. In this position the bar 86 can rotate freely, the handle 92 can be operated, and the strap 82 can be wound in or out.

The method of loading of a load such as a ladder is as follows. With the load carrying trolley in its lowermost loading position (as shown in Fig. 21a), a ladder L is laid against the trolley 19. The winch handle 92 is pushed against the spring 94 to release the pins 90, and then turned to pay out the strap 82. The strap hook 84 is hooked underneath a rung of the ladder and the winch handle 92 axially pushed and turned to wind in the strap 82, lifting the ladder L off the ground. When the ladder L has been raised fully on to the loading trolley 19 the winch handle 92 is released so that the pins 90 move back underneath the top plate 96, locking the winch against rotation. The operation of the spring 94 in this manner ensures that the locked position is the fail-safe or normal position. Once in a position on the loading trolley 19 the ladder L is further secured by means of a clamp or straps (not shown) to the trolley 19. The trolley 19 is then pushed on to the top of the vehicle V as shown in Fig. 21c, and the catch and latch arrangements operate to secure the loading trolley in its travelling position.

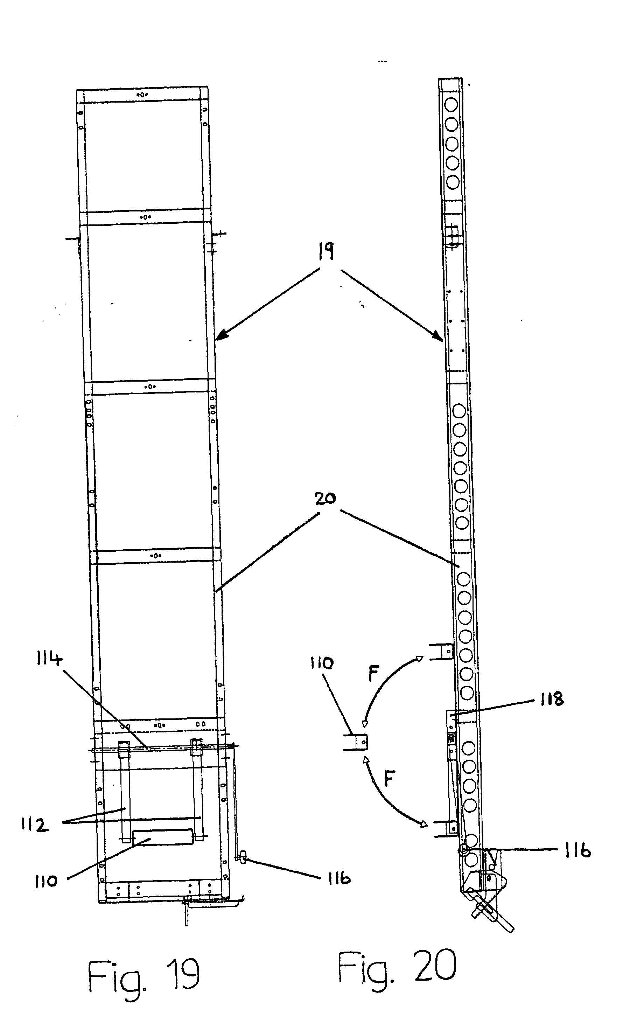

An alternative means of loading a ladder onto the trolley, a crank assembly, is shown in Figs. 19 and 20. A U-shaped channel 110 is rotatably mounted between two arms 112, which are fixed to a circular cross-section bar 114. The bar 114 is rotatably mounted to side plates 118, and on one side extends through the side plates 118 to a handle 116. The side plates 114 are fixed to the longitudinally extending members 20 of the load carrying trolley 19, at a position towards the lower end of the trolley 19 when the trolley 19 is in its lowermost loading position.

The method of operation of the crank assembly loading means is as follows. With the load carrying trolley 19 in its lowermost loading position (as shown in Fig. 21a) and the crank assembly also in its lowermost position, a ladder L is laid against the trolley 19, and a rung of the ladder L engaged with the U-shaped channel 110. The handle 116 is swung upwards, which rotates the channel 110 upwards through an arc as shown by the arrows F in Fig. 20, lifting the ladder L up from the ground and into position against the trolley 19 (Fig. 21b). The ladder L is secured by means of a clamp or straps to the trolley 19, and the trolley 19 pushed onto the top of the vehicle V. The catch and latch arrangements operate to secure the loading trolley in its travelling position.

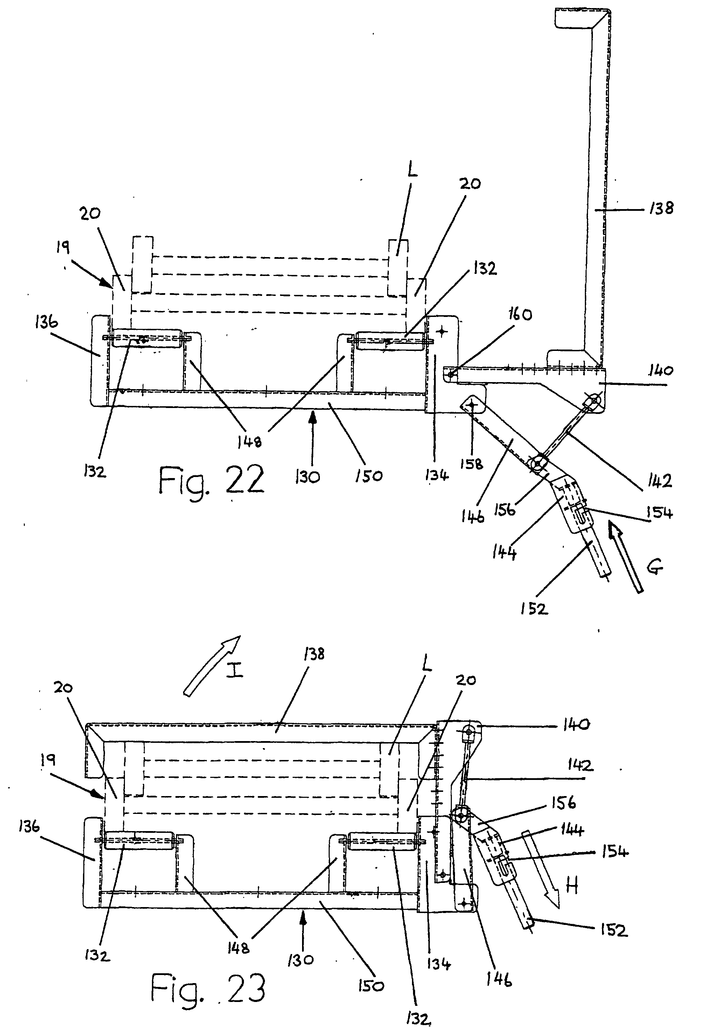

In another modification, a means for securing the forward part of the ladder is provided as shown in Figs. 22 and 23. The ladder securing assembly 130 includes a mounting cross member 150 which is attachable to the vehicle. Side supporting members 134, 136 and 148 are fixed to the cross member 150, and rollers 132 are rotatably mounted on the side supporting members 134, 136 and 148. Side supporting members 134 and 160 project above the topmost level of the rollers 132. Securing arm 138 is fixed to securing arm side member 140, which is pivotally connected at pivot 160 to side supporting member 134. Lower connecting member 146 is pivotally connected at one end to side supporting member 134 at pivot 158 and is pivotally connected at its other end to one end of upper connecting member 142 and the support bracket 156; the upper connecting member 142 is pivotally connected at its upper end to the securing arm side member 140. The support bracket 156 is pivotally connected at one end to the upper connecting member 142 and the lower connecting member 146, and at the other end to a circular section rod 152. On one side only the bracket 156 has an extension 144, parallel to and spaced apart from the rod 152. The extension 144 has a slot 154 which runs from the upwardly and outwardly facing edge of the extension in an inward downward and then an outward downward direction. The arrangement of the slot 154, the extension 144 and the rod 152 is similar to that previously described for slot 66, extension 42¹ and rod 54.

In use the ladder securing assembly 130 is mounted on the vehicle separate to and forward of the storage rack previously described. Fig. 22 shows the open loading position. A ladder L is loaded onto the load carrying trolley 19 at the back of the vehicle V, and the trolley 19 pushed onto the top of vehicle V. The trolley 19 and the ladder L may project forward of the channels 10 and onto the rollers 132, guided by the upward projections of side supporting members 136 and 134. The rollers 132 allow easy movement of the ladder L and trolley 19. The rear end of the trolley 19 is locked in position by the latch means and catch means described previously. The front end of the trolley and the ladder then may be secured as follows. The removable lock disengaging member 60 with the radially extending finger 62, shown in Fig. 5 is placed over the rod 152 and the member 60 rotated so that the finger 62 seats in the slot 154. The disengaging member 60 is pushed in the direction shown by the arrow G in Fig. 22 so that the bracket 156 is moved upwards and inwards. The connecting members 146 and 142 move upwards and rotate about pivot 158, in turn causing the securing arm side member 140 to rotate upwards about pivot 160. Securing arm 138 moves over the ladder L and down to the securing position as shown in Fig. 23. It will be noticed in Fig. 23 that the combined length of the upper connecting member 142 and the lower connecting member 146 are slightly greater than the securing arm side member 140. This provides a toggle clamp effect which ensures that the load is locked securely in position while travelling.

Releasing the ladder L and trolley 19 is a reverse process of the above.

The embodiments described offer considerable advantages over prior arrangement. These include a fixed ladder storage system which requires access to and from the roof. A relatively small improvement of this basic system is a roof mounted rack where ladders are mounted using a rope and pulley system operated from ground level. This does not eliminate all the health and safety hazards as it is still necessary for the operative to climb onto the roof to secure and release the ladders.

A proposal made with a view to eliminating some of the disadvantages of earlier systems is a side loading system. This is relatively complex and expensive and involves the operative standing by the side of the vehicle which is often a hazardous position. Additionally a side loading system requires the operative to lift the ladders or other load through some considerable distance and before they are secured to the rack.

The storage rack described in the embodiment is relatively cheap compared with existing systems. It is very flexible in respect of the size and type of load it can carry. It is a relatively simple design with a minimal number of easily replaceable components, its weight is relatively low, its fitting is flexible so that it is suitable for use on a wide range of vehicles. It provides a secure and positive load securing system and it is simple to operate by a single person.

## Claims

1. A storage rack for mounting on an elevated generally horizontal surface including a rail assembly (11), mounting means for mounting the rail assembly (11) on the surface, a load carrying trolley (19) movable along the rail assembly (11) from a storage position where one end of the trolley (19) is at one end of the rail assembly (11) to a loading position where said one end of the trolley (19) projects beyond the said one end of the rail assembly (11) and the said surface, rail engaging means (28) mounted on the trolley (19) between its mid point and the other end thereof and trolley supporting guide means (18) at said one end of the rail assembly (11) and supporting the trolley (19) thereon whereby the trolley (19) is movable linearly along the rail assembly (11) from its storage position until said rail engaging means (28 disengage from the rail assembly (11) to enable said one end of the trolley (19) to pivot downwardly about the rail engaging means (28), a locking assembly (31,30) being provided on the said one end of the trolley (19) and being engageable with complimentary means on the rail assembly to hold the trolley (19) in the storage position, the locking assembly (31, 30) comprising: a catch means (42, 46, 50, 56) engageable with the rail assembly (11); a latch means (30, 32, 38, 40) including a latch (30) mounted on the trolley (19) and engageable with a keeper (32) fixed to the rail assembly (11); and a lock disengaging means (60) comprising an elongate member operable from a position remote from said one end of the load carrying trolley (19), and being removably engageable with the locking assembly (31, 30) to disengage the catch means (42, 46, 50, 56) from the rail assembly (11) and to disengage the latch means (30, 32, 38, 40) from the trolley (19) and **characterized in that** whilst the elongate member remains engaged with the locking assembly (31, 30), the elongate member can move the load carrying trolley (19) relative to the rail assembly (11) away from the storage position.

2. A storage rack as claimed in claim 1, **characterised in that** the load carrying trolley (19) includes a load carrying platform which extends transversely beyond the rail assembly.

3. A storage rack as claimed in claim 2, **characterised in that** load securing means are provided on the load carrying platform.

4. A storage rack as claimed in any of the preceding claims, **characterised in that** the rail assembly (11) comprises a pair of parallel spaced apart channels (10) with the opening in one channel (10) facing the opening in the other channel (10).

5. A storage rack as claimed in claim 4, **characterised in that** the mounting means are fixable to the rail assembly (11) at a variety of predetermined points.

6. A storage rack as claimed in claims 4 or 5, **characterised in that** the load carrying trolley (19) includes a pair of longitudinally extending members (20) spaced apart from each other at a distance less than the distance between the channels (10) of the rail assembly and including bracing members (22) extending transversely between said longitudinally extending members (20).

7. A storage rack as claimed in claim 6, **characterised in that** the rail engaging means (28) are mounted to the side or underside of said longitudinally extending members (20) and comprise rolling elements (28) located within the channels (10) and rotatably mounted to the said members (20).

8. A storage rack as claimed in claim 6, **characterised in that** the rail engaging means (28) are mounted to the side or underside of said longitudinally extending members (20) and comprise sliding elements located within the channels (10) and rotatably mounted to the said members (20).

9. A storage rack as claimed in claims 6 to 8, **characterised in that** the trolley supporting guide means (18) comprises a rotatable assembly (18) mounted about an axis (14) extending transversely between the channel members (10) on which the lower surface of said longitudinally extending members (20) engage.

10. A storage rack as claimed in claim 9, **characterised in that** the rotatable assembly (18) comprises flanged wheels (18) rotatably mounted about a transversely extending rail assembly end bar (14).

11. A storage rack as claimed in any of the preceding claims, **characterised in that** the catch means (42,46,50,56) is biased towards a condition in which said rail assembly (11) is locked in position in the catch means (42,46,50,56).

12. A storage rack as claimed in any preceding claim, **characterised in that** the latch (30) is biased towards a position where it engages and locks with the keeper (32).

13. A storage rack as claimed in any preceding claim, **characterised in that** mounting means (54) are provided for the lock disengaging means (60) at the one end of the load carrying trolley (19), the mounting means (54) being adapted to maintain engagement of the disengaging means (60) with the locking assembly (31) when in an open position.

14. A storage rack as claimed in claim 11, **characterised in that** the catch means (42,46,50,56) comprises a ramp member (42) fixed at the one end of the load carrying trolley (19) and presenting a downwardly directed rail assembly end bar engaging surface (44) extending in the direction of said one end of the trolley (19) to said other end and a hook member (46) pivotally mounted on said ramp member (42) and presenting an upwardly inclined surface (53) leading from a bar engaging hook (56), means being provided on said hook member (46) such that its inclined surface (53) is biased towards the inclined surface (44) of the ramp member (42) thereby providing for entrapment of the rail assembly end bar (14) in the hook between the ramp (42) and hook members (46).

15. A storage rack as claimed in claim 14, **characterised in that** an operating arm (50) extends from the end of said hook member (46) on its side opposite from the hook (56), said operating arm (50) including engagement surfaces for selective engagement with the lock disengaging means (60).

16. A storage rack as claimed in claims 12 to 13, **characterised in that** the latch (30) of the latch means (30,32,38,40) is pivotally mounted about an axis parallel to the elongate axis of the load carrying trolley (19) and engageable with the slotted keeper (32) fixed to the rail assembly (11 ) at its outer end.

17. A storage rack as claimed in claim 16, **characterised in that** the latch (30) has an extension (38) at its inner end provided with means (40) for selective engagement by the lock disengaging means (60).

18. A storage rack as claimed in claims 1, 13, 14, 16 and 17, **characterised in that** the lock disengaging means (60) includes a tube engageable over a rod (54) projecting downwardly and outwardly from the said one end of the load carrying trolley (19) whereby the disengaging means (60) can be fitted over said rod (54) and rotated and moved axially relative thereto, the disengaging means (60) having a first transverse finger (62) adapted on rotation to engage the selective engagement means (40) on the extension (38) of the latch (30) and at least one shorter finger (64) adapted to engage the extension (50) from the hook member (46) of the catch means (42,46,50,56) whereby on rotation of the disengaging means (60) the latch (30) is disengaged from its keeper (32) and on axial movement of the disengaging means (60) along the rod (54) away from the said one end of the trolley means (19) the hook member (46) is disengaged from the rail assembly end bar (14).

19. A storage rack as claimed in claims 14, 15 and 18, **characterised in that** a guide plate (42') is provided on the end of the ramp member (42), the guide plate (42') having a slot (66,68) therein to permit removal of the lock disengaging means (60) from the downwardly extending bar (54) only when the fingers (62) are rotated sufficiently out of engagement with the catch and latch means.

20. A storage rack as claimed in claim 19, **characterised in that** an end stop in said guide plate slot(s) (68) prevents excessive axial movement of the lock disengaging means (60) along said downwardly directed bar (54).

21. A storage rack as claimed in any of the preceding claims, **characterised in that** a gas strut (71) is connected to the trolley (19) to control its pivotal movement.

22. A storage rack as claimed in any of the preceding claims, **characterised in that** the trolley (19) includes a means of aiding the loading of the trolley comprising a winch (86,88,92) and strap (82) mounted on the trolley (19), the strap (82) ending in a load engagement means (84).

23. A storage rack as claimed in claim 22, **characterised in that** the winch (86,88,92) includes a fail-safe locking arrangement (90,94,100) to selectively prevent rotation thereof.

24. A storage means as claimed in claim 23, **characterised in that** the lockable winch arrangement (86,88,92) comprises a bar (88) with a handle (92), a reel (86) mounted on the bar (88), the bar (88) rotatably mounted on side plates (98) fixed to the trolley (19), a top plate (96) supported by the side plates (98) with an aperture (100) through which the reel (86) protrudes, at least one radially extending pin (90) mounted on the bar (88) and having a length greater than the clearance between the bar (88) and the top plate (96), a spring (94) which biases the reel (86) towards a side of the aperture (100) in which position at least one of the radially extending pins (90) lies below the top plate (96) and prevent rotation of the bar (88) by abutment of the pin or pins (90) with the top plate (96), the pin or pins (90) being movable against the spring bias into the aperture (100) to allow rotation of the reel (86).

25. A storage rack as claimed in any of claims 1 to 20, **characterised in that** the trolley (19) includes a means of aiding the loading of the trolley (19) comprising a crank assembly (110,112,114,116,118) mounted on the trolley (19).

26. A storage rack as claimed in claim 25, **characterised in that** the crank assembly (110,112,114,116,118) comprises side plates (118) fixed to the trolley (19), a bar (114) with a handle (116) rotatably mounted on the side plates (118), two arms (112) fixed to the bar (114), and a U-shaped ladder rung receiving channel (110) rotatably mounted between the two arms (112).

27. A storage rack as claimed in any of the preceding claims, **characterised in that** a forward trolley and ladder securing assembly (130) is provided comprising a mounting means (150) for mounting the assembly (130) on the elevated generally horizontal surface, a support means (132,134,136,138) mounted on the mounting means (150) to support a forward part of the trolley (19) and ladder (L), a securing member (138,140) connected to one side of the support means (132,134,136,138) and selectively positionable, and a locking means (142,146,156) operating on the securing member (138,140) to lock the securing member (138,140) in position over the said forward part of the trolley (19) and ladder (L).

28. A storage rack as claimed in claim 27, **characterised in that** the support means comprises side supporting members (134,136,148) fixed to the mounting means (150) and a horizontal supporting means (132) mounted on the side supporting members (134,136,148).

29. A storage rack as claimed in claim 28, **characterised in that** the outermost side supporting members (134,136) project above the topmost level of the horizontal supporting means (132).

30. A storage rack as claimed in claims 28 and 29, **characterised in that** the horizontal supporting means (132) includes at least one roller (132), rotatably mounted on the side supporting members (134,136,148).

31. A storage rack as claimed in claims 27 to 30, **characterised in that** the securing member (138,140) is pivotally connected to one of the side supporting members (134).

32. A storage rack as claimed in claims 27 to 31, **characterised in that** the locking means (142,146,156) includes a lower connecting member (146) pivotally connected to one of the side supporting members (134), an upper connecting member (142) pivotally connected to the lower connecting member (146) and to the said securing member (134), a mounting bracket (156) pivotally connected to the upper and lower connecting members (142,146) at their junction, the upper and lower connecting members (142,146), the securing member (138,140) and the said side supporting member (134) in use providing a toggle clamp enabling the securing member (138,140) to be locked in position over the forward part of the ladder (L) and trolley (19).

33. A storage rack as claimed in claim 32, **characterised in that** the mounting bracket (156) is adapted to selectively maintain engagement of the lock disengaging means (60).

## Patentansprüche

1. Aufbewahrungsgestell zur Befestigung an einer hohen, vorwiegend horizontalen Fläche, mit einer Schienenanordnung (11), einem Befestigungsmittel zum Befestigen der Schienenanordnung (11) auf der Fläche, einem Lastträger-Verschiebungsgestell (19), das entlang der Schienenanordnung (11) bewegbar ist von einer Aufbewahrungsposition, in der ein Ende des Verschiebungsgestells (19) an einem Ende der Schienenanordnung (11) ist, zu einer Beladungsposition, in der das eine Ende des Verschiebungsgestells (11) über das eine Ende der Schienenanordnung (11) und die Fläche hinausragt, einem Schienen-Eingriffsmittel (28), das auf dem Verschiebungsgestell (19) zwischen seinem mittigen Punkt und seinem anderen Ende befestigt ist, sowie einem Verschiebungsgestell-Stützführungsmittel (18) an dem einen Ende der Schienenanordnung (11), auf welchem das Verschiebungsgestell (19) abgestützt ist; wobei das Verschiebungsgestell (19) entlang der Schienenanordnung (11) von seiner Aufbewahrungsposition linear bewegbar ist, bis das Schienen-Eingriffsmittel (28) aus der Schienenanordnung (11) freigegeben wird, damit das eine Ende des Verschiebungsgestells (19) um das Schienen-Eingriffsmittel (28) nach unten geschwenkt werden kann, wobei eine Verriegelungsanordnung (31, 30) an dem einen Ende des Verschiebungsgestells (19) angeordnet ist und mit komplementären Mitteln an der Schienenanordnung in Eingriff bringbar ist, um das Verschiebungsgestell (19) in der Aufbewahrungsposition zu halten, und wobei die Verriegelungsanordnung (31, 30) aufweist: ein Fangmittel (42, 46, 50, 56), das mit der Schienenanordnung (11) in Eingriff bringbar ist; ein Einrastmittel (30, 32, 38, 40) mit einer Einrastklinke (30), die an dem Verschiebungsgestell (19) befestigt ist und mit einer an der Schienenanordnung (11) befestigten Haltevorrichtung (32) in Eingriff bringbar ist; und ein Verriegelung-Freigabemittel (60), welches ein längliches Glied aufweist, das von einer von dem einen Ende des Lastträger-Verschiebungsgestells (19) entfernten Position betätigbar ist und mit der Verriegelungsanordnung (31, 30) abnehmbar in Eingriff bringbar ist, um das Fangmittel (42, 46, 50 56) von der Schienenanordnung (11) freizugeben bzw. zu lösen und um das Einrastmittel (30, 32, 38, 40) von dem Verschiebungsgestell (19) freizugeben bzw. zu lösen, **dadurch gekennzeichnet, dass**, solange das längliche Glied mit der Verriegelungsanordnung (31, 30) in Eingriff bleibt, das längliche Glied das Lastträger-Verschiebungsgestell (19) relativ zu der Schienenanordnung (11) von der Aufbewahrungsposition weg bewegen kann.

2. Aufbewahrungsgestell nach Anspruch 1, **dadurch gekennzeichnet, dass** das Lastträger-Verschiebungsgestell (19) eine Lastträger-Plattform enthält, die sich in Querrichtung über die Schienenanordnung hinaus erstreckt.

3. Aufbewahrungsgestell nach Anspruch 2, **dadurch gekennzeichnet, dass** Lastsicherungsmittel auf der Lastträger-Plattform vorgesehen sind.

4. Aufbewahrungsgestell nach einem der vorhergehenden Ansprüche, **dadurch gekennzeichnet, dass** die Schienenanordnung (11) ein Paar paralleler beabstandeter Kanäle (10) aufweist, wobei die Öffnung in einem Kanal (10) zu der Öffnung in dem anderen Kanal (10) weist.

5. Aufbewahrungsgestell nach Anspruch 4, **dadurch gekennzeichnet, dass** die Befestigungsmittel an der Schienenanordnung (11) an einer Vielzahl vorbestimmter Punkte befestigbar sind.

6. Aufbewahrungsgestell nach Anspruch 4 oder 5, **dadurch gekennzeichnet, dass** das Lastträger-Verschiebungsgestell (19) zwei sich in Längsrichtung erstreckende Glieder (20) enthält, die voneinander in einer Entfernung beabstandet sind, die kleiner als die Entfernung zwischen den Kanälen (10) der Schienenanordnung ist, und die Verstrebungsglieder (22) enthalten, die sich in Querrichtung zwischen den sich in Längsrichtung erstreckenden Gliedern (20) erstrecken.

7. Aufbewahrungsgestell nach Anspruch 6, **dadurch gekennzeichnet, dass** die Schienen-Eingriffsmittel (28) an der Seite oder der Unterseite der sich in Längsrichtung erstreckenden Glieder (20) montiert sind und Rollelemente (28) aufweisen, die innerhalb der Kanäle (10) angeordnet sind und an den Gliedern (20) drehbar montiert sind.

8. Aufbewahrungsgestell nach Anspruch 6, **dadurch gekennzeichnet, dass** die Schienen-Eingriffsmittel (28) an der Seite oder der Unterseite der sich in Längsrichtung erstreckenden Glieder (20) montiert sind und Gleitelemente aufweisen, die innerhalb der Kanäle (10) angeordnet sind und an den Gliedern (20) drehbar montiert sind.

9. Aufbewahrungsgestell nach Anspruch 6 bis 8, **dadurch gekennzeichnet, dass** das Verschiebungsgestell-Stützführungsmittel (18) eine drehbare Anordnung (18) aufweist, die um eine Achse (14) herum montiert ist, die sich in Querrichtung zwischen den Kanalgliedern (10) erstreckt, auf dem die untere Fläche der sich in Längsrichtung erstreckenden Glieder (20) in Eingriff ist.

10. Aufbewahrungsgestell nach Anspruch 9, **dadurch gekennzeichnet, dass** die drehbare Anordnung (18) Flanschräder, bzw. mit einem Flansch versehene Räder (18) aufweist, die um eine sich in Querrichtung erstreckende Schienenanordnung-Endstange (14) drehbar montiert sind.

11. Aufbewahrungsgestell nach einem der vorhergehenden Ansprüche, **dadurch gekennzeichnet, dass** das Fangmittel (42, 46, 50, 56) zu einem Zustand hin vorgespannt ist, in dem die Schienenanordnung (11) in ihrer Position in dem Fangmittel (42, 46, 50, 56) verriegelt ist.

12. Aufbewahrungsgestell nach einem der vorhergehenden Ansprüche, **dadurch gekennzeichnet, dass** die Einrastklinke (30) zu einer Position hin vorgespannt ist, in der sie mit der Haltevorrichtung (33) in Eingriff gelangt und eine Verriegelung durchführt.

13. Aufbewahrungsgestell nach einem der vorhergehenden Ansprüche, **dadurch gekennzeichnet, dass** Befestigungsmittel (54) für das Verriegelung-Freigabemittel (60) an dem einen Ende des Lastträger-Verschiebungsgestells (19) vorgesehen sind, wobei die Befestigungsmittel (54) dazu ausgelegt sind, um den Eingriff des Freigabemittels (60) mit der Verriegelungsanordnung (31) in einer geöffneten Stellung beizubehalten.

14. Aufbewahrungsgestell nach Anspruch 11, **dadurch gekennzeichnet, dass** das Fangmittel (42, 46, 50, 56) ein Rampenglied (42) aufweist, das an dem einen Ende des Lastträger-Verschiebungsgestells (19) befestigt ist und eine nach unten gerichtete Schienenanordnung-Endstangen-Eingriffsfläche (44) hat, die sich in der Richtung des einen Endes des Verschiebungsgestells (19) zu dem anderen Ende hin erstreckt, und mit einem Hakenglied (46), das an dem Rampenglied (42) schwenkbar montiert ist und eine nach oben geneigte Fläche (53) hat, die von einem Stangen-Eingriffshaken (56) wegführt, wobei an dem Hakenglied (46) Mittel derart vorgesehen sind, dass seine geneigte Fläche (43) zu der geneigten Fläche (44) des Rampenglieds (42) vorgespannt ist, wodurch das Einfangen der Schienenanordnung-Endstange (14) in dem Haken zwischen dem Rampenglied (42) und dem Hakenglied (46) ermöglicht wird.

15. Aufbewahrungsgestell nach Anspruch 14, **dadurch gekennzeichnet, dass** sich ein Betätigungsarm (50) von dem Ende des Hakenglieds (46) auf seiner Seite gegenüber von dem Haken (46) erstreckt, wobei der Betätigungsarm (50) Eingriffsflächen für einen selektiven Eingriff mit dem Verriegelung-Freigabemittel (60) enthält.

16. Aufbewahrungsgestell nach Anspruch 12 bis 13, **dadurch gekennzeichnet, dass** die Einrastvorrichtung (30) des Einrastmittels (30, 32, 38, 40) um eine Achse parallel zu der Längsachse des Lastträger-Verschiebungsgestells (19) schwenkbar montiert ist und mit der geschlitzten Haltevorrichtung (32), die an der Schienenanordnung (11) an ihrem äusseren Ende befestigt ist, in Eingriff bringbar ist.

17. Aufbewahrungsgestell nach Anspruch 18, **dadurch gekennzeichnet, dass** die Einrastvorrichtung (30) eine Verlängerung (38) an ihrem inneren Ende hat, das mit einem Mittel (40) zum selektiven Eingriff durch das Verrieglungs-Freigabemittel (60) ausgestattet ist.

18. Aufbewahrungsgestell nach Anspruch 1, 13, 14, 16 und 17, **dadurch gekennzeichnet, dass** das Verriegelung-Freigabemittel (60) ein Rohr enthält, das über einer Stange (44) in Eingriff gebracht werden kann, die nach unten und nach aussen von dem einen Ende des Lastträger-Verschiebungsgestells (19) hervorsteht, wodurch das Freigabemittel (60) über der Stange (44) befestigt sowie gedreht und relativ dazu axial bewegt werden kann, wobei das Freigabemittel (60) einen ersten Querfinger (62) hat, der dazu ausgelegt ist, um mit dem Selektiv-Eingriffsmittel (40) an der Verlängerung (38) der Einrastvorrichtung (30) bei einer Drehung in Eingriff zu gelangen, und mindestens einen kürzeren Finger (64) hat, der dazu ausgelegt ist, um mit der Verlängerung (50) von dem Hakenglied (46) des Fangmittels (42, 46, 50, 56) in Eingriff zu gelangen, wodurch beim Drehen des Freigabemittels (60) die Einrastvorrichtung (30) von ihrer Haltevorrichtung (32) freigegeben wird und bei einer axialen Bewegung des Freigabemittels (60) entlang der Stange (44) weg von dem einen Ende des Verschiebungsgestell-Mittel (19) das Hakenglied (46) von der Schienenanordnung-Endstange (14) freigegeben wird.

19. Aufbewahrungsgestell nach Anspruch 14, 15, und 18, **dadurch gekennzeichnet, dass** eine Führungsplatte (42') an dem Ende des Rampenglieds (42) vorgesehen ist, wobei die Führungsplatte (42') eine Schlitz (66, 68) in ihr hat, um das Entfernen des Verriegelung-Freigabemittels (60) von der sich nach unten erstreckenden Stange (44) nur dann zu gestatten, wenn die Finger (62) ausreichend weit aus dem Eingriff mit dem Fangmittel und dem Einrastmittel herausgedreht werden.

20. Aufbewahrungsgestell nach Anspruch 19, **dadurch gekennzeichnet, dass** ein Endanschlag in dem Führungsplattenschlitz bzw. in den Führungsplattenschlitzen (68) eine übermässige axiale Bewegung des Verriegelung-Freigabemittels (60) entlang der nach unten gerichteten Stange (54) verhindert.

21. Aufbewahrungsgestell nach einem der vorhergehenden Ansprüche, **dadurch gekennzeichnet, dass** eine Gasstrebe (71) mit dem Verschiebungsgestell (19) verbunden ist, um seine Schwenkbewegung zu steuern.

22. Aufbewahrungsgestell nach einem der vorhergehenden Ansprüche, **dadurch gekennzeichnet, dass** das Verschiebungsgestell (19) ein Mittel zum Helfen beim Beladen des Verschiebungsgestells enthält mit einer Winde (86, 88, 92) und einem Gurt (82), die an dem Verschiebungsgestell (19) montiert sind, wobei der Gurt (82) in einem Last-Eingriffsmittel (84) endet.

23. Aufbewahrungsgestell nach Anspruch 22, **dadurch gekennzeichnet, dass** die Winde (86, 88, 92) eine ausfallsichere Verriegelungsanordnung (90, 94, 100) enthält, um eine Drehung von ihr selektiv zu verhindern.

24. Aufbewahrungsgestell nach Anspruch 23, **dadurch gekennzeichnet, dass** die verriegelbare Windenanordnung (86, 88, 92) aufweist: eine Stange (88) mit einem Handgriff (92); eine an der Stange (88) montierte Spule (86), wobei die Stange (88) an Seitenplatten (98) montiert ist, die an dem Verschiebungsgestell (19) befestigt sind; eine obere Platte (96), die durch die Seitenplatten (98) abgestützt ist, die eine Öffnung (100) enthalten, durch die die Spule (86) hindurchragt; mindestens einen sich radial erstreckenden Stift (90), der an der Stange (88) montiert ist und eine Länge hat, die grösser als der Freiraum zwischen der Stange (88) und der oberen Platte (96) ist; eine Feder (94), welche die Spule (86) zu einer Seite der Öffnung (100) hin vorspannt, in welcher Position mindestens einer der sich radial erstreckenden Stifte (90) unterhalb der oberen Platte (96) liegt und die Drehung der Stange (88) durch Anschlag des Stiftes oder der Stifte (90) an der oberen Platte (96) verhindert, wobei der Stift oder die Stifte (90) gegen die Federvorspannung in die Öffnung (100) bewegbar sind, um die Drehung der Spule (86) zu ermöglichen.

25. Aufbewahrungsgestell nach einem der Ansprüche 1 bis 20, **dadurch gekennzeichnet, dass** das Verschiebungsgestell (19) ein Mittel zum Helfen beim Beladen des Verschiebungsgestells (19) enthält mit einer an dem Verschiebungsgestell (19) montierten Kurbelanordnung (110, 112, 114, 116, 118).

26. Aufbewahrungsgestell nach Anspruch 25, **dadurch gekennzeichnet, dass** die Kurbelanordnung (110, 112, 114, 116, 118) aufweist: Seitenplatten (118), die an dem Verschiebungsgestell (19) befestigt sind; eine Stange (114) mit einem Handgriff (116), die an den Seitenplatten (118) drehbar montiert ist; zwei Arme (112), die an der Stange (114) befestigt sind; und einen U-förmigen Leitersprossen-Aufnahmekanal (110), der zwischen den beiden Armen (112) drehbar gelagert ist.

27. Aufbewahrungsgestell nach einem der vorhergehenden Ansprüche, **dadurch gekennzeichnet, dass** eine vordere Verschiebungsgestell- und Leiter-Sicherungsanordnung (130) vorgesehen ist, welche aufweist: ein Befestigungsmittel (150) zum Befestigen der Anordnung (130) an der hohen, im allgemeinen horizontalen Fläche; ein Stützmittel (132, 134, 136, 138), das an dem Befestigungsmittel (150) befestigt ist, um einen vorderen Teil des Verschiebungsgestells (19) und der Leiter (L) abzustützen; ein Sicherungsglied (138, 140), das mit einer Seite des Stützmittels (132, 134, 136, 138) verbunden ist und selektiv positionierbar ist; und ein Verriegelungsmittel (142, 146, 156), das auf das Sicherungsglied (138, 140) einwirkt, um das Sicherungsglied (138, 140) in seiner Stellung über dem vorderen Teil des Verschiebungsgestells (19) und der Leiter (L) zu verriegeln.

28. Aufbewahrungsgestell nach Anspruch 27, **dadurch gekennzeichnet, dass** das Stützmittel seitliche Stützglieder (134, 136, 148), die an dem Befestigungsmittel (150) befestigt sind, und ein horizontales Stützmittel (132), das an den seitlichen Stützgliedern (134, 136, 148) befestigt ist, aufweist.

29. Verschiebungsgestell nach Anspruch 28, **dadurch gekennzeichnet, dass** die äussersten seitlichen Stützglieder (134, 136) über die oberste Ebene des horizontalen Stützmittels (132) hinausragen.

30. Aufbewahrungsgestell nach Anspruch 28 und 29, **dadurch gekennzeichnet, dass** das horizontale Stützmittel (132) mindestens eine Rolle (132) enthält, die an den seitlichen Stützgliedern (134, 136, 148) drehbar montiert ist.

31. Aufbewahrungsgestell nach Anspruch 27 bis 30, **dadurch gekennzeichnet, dass** das Sicherungsglied (138, 140) an einem der seitlichen Stützglieder (134) schwenkbar verbunden ist.

32. Aufbewahrungsgestell nach Anspruch 27 bis 31, **dadurch gekennzeichnet, dass** das Verriegelungsmittel (142, 146, 156) enthält: ein unteres Verbindungsglied (146), das mit einem der seitlichen Stützglieder (134) schwenkbar verbunden ist; ein oberes Verbindungsglied (142), das mit dem unteren Verbindungsglied (146) und dem Sicherungsglied (134), schwenkbar verbunden ist; eine Befestigungsklammer (156), die mit dem oberen und dem unteren Verbindungsglied (142, 146) an ihrer Verbindung schwenkbar verbunden ist, wobei das obere und das untere Verbindungsglied (142, 146), das Sicherungsglied (138, 140) und das seitliche Stützglied (134) im Betrieb eine Knebelklemme bilden, die es ermöglicht, das Sicherungsglied (138, 140) in seiner Stellung über dem vorderen Teil der Leiter (L) und dem Verschiebungsgestell (19) zu verriegeln.

33. Aufbewahrungsgestell nach Anspruch 32, **dadurch gekennzeichnet, dass** die Befestigungsklammer (156) dafür ausgelegt ist, um den Eingriff des Verriegelung-Freigabemittels (60) selektiv beizubehalten.

## Revendications

1. Râtelier de stockage destiné à être monté sur une surface surélevée généralement horizontale, comprenant un ensemble de rails (11), des moyens de montage pour le montage de l'ensemble de rails (11) sur la surface, un chariot de charge (19) mobile le long de l'ensemble de rails (11) d'une position de stockage, dans laquelle une extrémité du chariot (19) se trouve à une extrémité de l'ensemble de rails (11), vers une position de chargement dans laquelle ladite extrémité du chariot (19) déborde de ladite extrémité de l'ensemble de rails (11) et de ladite surface, des moyens d'engagement des rails (28) montés sur le chariot (19) entre son point intermédiaire et l'autre extrémité de celui-ci et des moyens de guide de support du chariot (18) situés à ladite extrémité de l'ensemble de rails (11) et soutenant le chariot (19) sur celle-ci, moyennant quoi le chariot (19) peut être déplacé linéairement le long de l'ensemble de rails (11) depuis sa position de stockage jusqu'à ce que lesdits moyens d'engagement des rails (28) se désengagent de l'ensemble de rails (11) pour permettre à ladite extrémité du chariot (19) de pivoter vers le bas sur les moyens d'engagement des rails (28), un organe de verrouillage (31, 30) étant prévu sur ladite extrémité du chariot (19) et apte à être engagé par des moyens complémentaires sur l'ensemble de rails pour maintenir le chariot (19) en position de stockage, l'organe de verrouillage (31, 30) comprenant : des moyens de blocage (42, 46, 50, 56) qui peuvent être engagés avec l'ensemble de rails (11) ; des moyens de verrouillage (30, 32, 38, 40) comprenant un loquet (30) monté sur le chariot (19) et pouvant être encliqueté par un cliquet de sûreté (32) fixé sur l'ensemble de rails (11) ; et des moyens de désengagement de verrouillage (60) comprenant un élément allongé, pouvant fonctionner depuis une position éloignée de ladite extrémité du chariot de charge (19) et pouvant être engagé de façon amovible avec l'organe de verrouillage (31, 30) pour désengager les moyens de blocage (42, 46, 50, 56) de l'ensemble de rails (11) et pour désengager les moyens de verrouillage (30, 32, 38, 40) du chariot (19) et **caractérisé en ce que**, tandis que l'élément allongé reste engagé avec l'organe de verrouillage (31, 30), l'élément allongé peut déplacer le chariot de charge (19) par rapport à l'ensemble de rails (11) hors de la position de stockage.

2. Râtelier de stockage tel que revendiqué dans la revendication 1, **caractérisé en ce que** le chariot de charge (19) comprend une plateforme de charge qui s'étend transversalement au-delà de l'ensemble de rails.

3. Râtelier de stockage tel que revendiqué dans la revendication 2, **caractérisé en ce que** des moyens de fixation de la charge sont prévus sur la plateforme de charge.

4. Râtelier de stockage tel que revendiqué dans l'une quelconque des revendications précédentes,
**caractérisé en ce que** l'ensemble de rails (11) comprend une paire de voies (10) parallèles espacées l'une de l'autre, l'ouverture d'une voie faisant face à l'ouverture de l'autre voie (10).

5. Râtelier de stockage tel que revendiqué dans la revendication 4, **caractérisé en ce que** les moyens de montage peuvent être fixés sur l'ensemble de rails (11) sur une gamme de points prédéterminés.

6. Râtelier de stockage tel que revendiqué dans les revendications 4 ou 5, **caractérisé en ce que** le chariot de charge (19) comprend une paire d'éléments (20) s'étendant longitudinalement espacés l'un de l'autre à une distance inférieure à la distance qui sépare les voies (10) de l'ensemble de rails et comprenant des éléments d'ancrage (22) s'étendant transversalement entre lesdits éléments (20) s'étendant longitudinalement.

7. Râtelier de stockage tel que revendiqué dans la revendication 6, **caractérisé en ce que** les moyens d'engagement des rails (28) sont montés sur le côté ou le dessous desdits éléments (20) s'étendant longitudinalement et comprennent des éléments de roulement (28) situés à l'intérieur des voies (10) et qui sont fixés de manière rotative aux dits éléments (20).

8. Râtelier de stockage tel que revendiqué dans la revendication 6, **caractérisé en ce que** les moyens d'engagement des rails (28) sont montés sur le côté ou le dessous desdits éléments (20) s'étendant longitudinalement et comprennent des éléments de glissement (28) situés à l'intérieur des voies (10) et qui sont fixés de manière rotative aux dits éléments (20).

9. Râtelier de stockage tel que revendiqué dans les revendications 6 à 8, **caractérisé en ce que** les moyens de guide de support de chariot (18) comprennent un ensemble rotatif (18) monté sur un axe (14) s'étendant transversalement entre les éléments de voie (10) sur lequel s'engage la surface inférieure desdits éléments (20) s'étendant longitudinalement.

10. Râtelier de stockage tel que revendiqué dans la revendication 9, **caractérisé en ce que** l'ensemble rotatif (18) comprend des poulies à rebord (18) montées de manière rotative sur une barre d'extrémité (14) de l'ensemble de rails s'étendant transversalement.

11. Râtelier de stockage tel que revendiqué dans l'une quelconque des revendications précédentes, **caractérisé en ce que** les moyens de blocage (42, 46, 50, 56) sont chargés vers une position dans laquelle ledit ensemble de rails (11) est verrouillé en position dans les moyens de blocage (42, 46, 50, 56).

12. Râtelier de stockage tel que revendiqué dans l'une quelconque des revendications précédentes, **caractérisé en ce que** le loquet (30) est chargé vers une position dans laquelle il est encliqueté et verrouillé par le cliquet de sûreté (32).

13. Râtelier de stockage tel que revendiqué dans l'une quelconque des revendications précédentes, **caractérisé en ce que** des moyens de fixation (54) sont prévus pour les moyens de désengagement de verrouillage (60) à une extrémité du chariot de charge (19), les moyens de fixation (54) étant conçus pour maintenir l'engagement des moyens de désengagement (60) par l'organe de verrouillage (31) lorsqu'il se trouve en position ouverte.

14. Râtelier de stockage tel que revendiqué dans la revendication 11, **caractérisé en ce que** les moyens de blocage (42, 46, 50, 56) comprennent un élément de rampe (42) fixé à une extrémité du chariot de charge (19) et présentant une surface (44) engageant la barre d'extrémité de l'ensemble de rails et dirigée vers le bas qui s'étend dans la direction de ladite une extrémité du chariot (19) vers ladite autre extrémité, et un élément de crochet (46) monté de façon pivotante sur ledit élément de rampe (42) et présentant une surface inclinée vers le haut (53) s'étendant depuis un crochet (56) engageant une barre, des moyens étant fournis sur ledit élément de crochet (46) de telle sorte que sa surface inclinée (53) est chargé vers la surface inclinée (44) de l'élément de rampe (42), ce qui permet de bloquer la barre (14) d'extrémité de l'ensemble de rails dans le crochet situé entre la rampe (42) et les éléments de crochet (46).

15. Râtelier de stockage tel que revendiqué dans la revendication 14, **caractérisé en ce qu'**un bras de commande (50) s'étend depuis l'extrémité dudit élément de crochet (46) sur sa face opposée depuis le crochet (56), ledit bras de commande (50) comprenant des surfaces d'engagement pour l'engagement sélectif par les moyens de désengagement de verrouillage (60).

16. Râtelier de stockage tel que revendiqué dans les revendications 12 ou 13, **caractérisé en ce que** le loquet (30) des moyens de verrouillage (30, 32, 38, 40) est monté de façon pivotante sur un axe parallèle à l'axe allongé du chariot de charge (19) et peut être encliqueté par le cliquet de sécurité (32) à fente fixé à l'ensemble de rails (11) au niveau de son extrémité externe.

17. Râtelier de stockage tel que revendiqué dans la revendication 16, **caractérisé en ce que** le loquet (30) présente une extension (38) sur son extrémité interne munie de moyens (40) destinés à l'engagement sélectif par les moyens de désengagement de verrouillage (60).

18. Râtelier de stockage tel que revendiqué dans les revendications 1, 13, 14, 16 et 17, **caractérisé en ce que** les moyens de désengagement de verrouillage (60) comprennent un tube pouvant être engagé sur une barre (54) faisant saillie vers le bas et en dehors de ladite extrémité du chariot de charge (19), moyennant quoi les moyens de désengagement (60) peuvent être ajustés sur ladite barre (54), pivotés et déplacés axialement par rapport à celle-ci, les moyens de désengagement (60) ayant un premier doigt transversal (62) adapté en rotation pour engager les moyens d'engagement sélectifs (40) sur l'extension (38) du loquet (30), et au moins un doigt plus court (64) conçu pour engager l'extension (50) à partir de l'élément de crochet (46) des moyens de verrouillage (42, 46, 50, 56), moyennant quoi en pivotant les moyens de désengagement (60), le loquet (30) est désengagé de son cliquet de sécurité (32), et par un mouvement axial des moyens de désengagement (60) le long de la barre (54) en s'éloignant de ladite extrémité des moyens de chariot (19), l'élément de crochet (46) est désengagé de la barre d'extrémité (14) de l'ensemble de rails.

19. Râtelier de stockage tel que revendiqué dans les revendications 14, 15 et 18, **caractérisé en ce qu'**une plaque de guidage (42') est fournie sur l'extrémité de l'élément de rampe (42), la plaque de guidage (42') comprenant une fente (66, 68) permettant le retrait des moyens de désengagement de verrouillage (60) de la barre (54) s'étendant vers le bas, uniquement lorsque les doigts (62) sont tournés suffisamment pour permettre leur désengagement par rapport aux moyens de verrouillage et de blocage.

20. Râtelier de stockage tel que revendiqué dans la revendication 19, **caractérisé en ce qu'**un butoir final dans ladite (lesdites) fente (s) de la plaque de guidage (68) évite un mouvement axial excessif des moyens de désengagement de verrouillage (60) le long de la barre (54) dirigée vers le bas.

21. Râtelier de stockage tel que revendiqué dans l'une quelconque des revendications précédentes, **caractérisé en ce qu'**un vérin (71) est connecté au chariot (19) pour commander son mouvement de pivotement.

22. Râtelier de stockage tel que revendiqué dans l'une quelconque des revendications précédentes, **caractérisé en ce que** le chariot (19) comprend des moyens permettant de favoriser le chargement du chariot comprenant un treuil (86, 88, 92) et une courroie (82) fixés sur le chariot (19), la courroie (82) se terminant dans des moyens d'engagement de charge (84).

23. Râtelier de stockage tel que revendiqué dans la revendication 22, **caractérisé en ce que** le treuil (86, 88, 92) comprend un dispositif de verrouillage à sûreté intégrée (90, 94, 100) pour éviter de manière sélective la rotation de celui-ci.

24. Moyens de stockage tels que revendiqués dans la revendication 23, **caractérisés en ce que** le dispositif de treuil (86, 88, 92) pouvant être verrouillé comprend une barre (88) avec une poignée (92), une bobine (86) fixée sur la barre (88), la barre (88) étant fixée de manière rotative sur des plaques latérales (98) fixées au chariot (19), une plaque supérieure (96) soutenue par les plaques latérales (98) avec une ouverture (100) à travers laquelle la bobine (86) fait saillie, au moins une broche (90) s'étendant radialement fixée sur la barre (88) et présentant une longueur supérieure à l'écart existant entre la barre (88) et la plaque supérieure (96), un ressort (94) qui charge la bobine (86) vers un côté de l'ouverture (100) dans la position de laquelle au moins une des broches (90) s'étendant radialement se situe en dessous de la plaque supérieure (96) et évite la rotation de la barre (88) par l'appui de la broche ou des broches (90) sur la plaque supérieure (96), la broche ou les broches (90) pouvant être déplacées contre la charge du ressort dans l'ouverture (100) pour permettre la rotation de la bobine (86).

25. Râtelier de stockage tel que revendiqué dans l'une quelconque des revendications 1 à 20, **caractérisé en ce que** le chariot (19) comprend des moyens favorisant le chargement du chariot (19) comprenant un ensemble de coulisses (110, 112, 114, 116, 118) fixées sur le chariot (19).

26. Râtelier de stockage tel que revendiqué dans la revendication 25, **caractérisé en ce que** l'ensemble de coulisses (110, 112, 114, 116, 118) comprend des plaques latérales (118) fixées au chariot (19), une barre (114) avec une poignée (116) fixée de façon rotative sur les plaques latérales (118), deux bras (112) fixés à la barre (114), et une voie (110) de réception de barreaux d'échelle en forme de U montée de manière rotative entre les deux bras (112).

27. Râtelier de stockage tel que revendiqué dans l'une quelconque des revendications précédentes, **caractérisé en ce qu'**il est prévu un ensemble de chariot avant et de fixation d'échelle (130) comprenant des moyens de fixation (150) pour le montage de l'ensemble (130) sur la surface surélevée généralement horizontale, des moyens de support (132, 134, 136, 138) fixés sur les moyens de montage (150) pour soutenir une partie avant du chariot (19) et de l'échelle (L), un élément de fixation (138, 140) relié à une face des moyens de support (132, 134, 136, 138) et pouvant être positionné de façon sélective, et des moyens de verrouillage (142, 146, 156) fonctionnant sur l'élément de fixation (138, 140) pour verrouiller l'élément de fixation (138, 140) en position sur ladite partie avant du chariot (19) et de l'échelle (L).

28. Râtelier de stockage tel que revendiqué dans la revendication 27, **caractérisé en ce que** les moyens de support comprennent des éléments de soutien latéral (134, 136, 148) fixés sur les moyens de montage (150) et des moyens de soutien horizontal (132) montés sur les éléments de soutien latéral (134, 136, 148).

29. Râtelier de stockage tel que revendiqué dans la revendication 28, **caractérisé en ce que** les éléments de soutien latéral (134, 136) les plus externes font saillie au-dessus du niveau le plus élevé des moyens de soutien horizontal (132).

30. Râtelier de stockage tel que revendiqué dans les revendications 28 et 29, **caractérisé en ce que** les moyens de soutien horizontal (132) comprennent au moins un rouleau (132) fixé de manière rotative sur les éléments de soutien latéral (134, 136, 148).

31. Râtelier de stockage tel que revendiqué dans les revendications 27 à 30, **caractérisé en ce que** l'élément de fixation (138, 140) est relié de façon pivotante à un des éléments de soutien latéral (134).

32. Râtelier de stockage tel que revendiqué dans les revendications 27 à 31, **caractérisé en ce que** les moyens de verrouillage (142, 146, 156) comprennent un élément de connexion inférieur (146) qui est relié de façon pivotante à un des éléments de soutien latéral (134), un élément de connexion supérieur (142) relié de façon pivotante à l'élément de connexion inférieur (146) et audit élément de fixation (134), une bride de fixation (156) reliée de façon pivotante aux éléments de connexion supérieur et inférieur (142, 146) au niveau de leurs jonctions, les éléments de connexion supérieur et inférieur (142, 146), l'élément de fixation (138, 140) et ledit élément de soutien latéral (134) fournissant pendant l'utilisation un crampon articulé qui permet de verrouiller en position l'élément de fixation (138, 140) sur la partie avant de l'échelle (L) et du chariot (19).

33. Râtelier de stockage tel que revendiqué dans la revendication 32, **caractérisé en ce que** la bride de fixation (156) est conçue pour maintenir sélectivement l'engagement des moyens de désengagement de verrouillage (60).
